# EUROPEAN PATENT APPLICATION

(11) **EP 4 422 208 A1**
(43) Date of publication of application: **28.08.2024**
(21) Application number: 24157819.4
(22) Date of filing: 15.02.2024
(51) Int. Cl.: H04R 5/033, H04R 1/28, H04R 5/02

(54) **ACOUSTIC DEVICE**

(30) Priority: 22.02.2023 JP 2023026459
(71) Applicant: Alps Alpine Co., Ltd., Ota-ku, Tokyo 145-8501 (JP)
(72) Inventor: Ito, Ryo, Iwaki-city, Fukushima (JP)
(74) Representative: Schmitt-Nilson Schraud Waibel Wohlfrom Patentanwälte Partnerschaft mbB

(57) **Abstract**

With a vehicle-mounted acoustic device, a bass-reflex speaker system, composed of an enclosure, ducts, and a speaker unit, is accommodated in a head restraint. Each duct has a large ratio of the duct length to the area of the duct cross section to increase the load mass of air in the duct, so that the resonant frequency of the vibration unit in the speaker unit can be set in a frequency band lower than the resonant frequency of a Helmholtz resonator. Thus, sound pressure in a low-frequency band equal to or lower than the resonant frequency of the Helmholtz resonator can be emphasized and the emphasized sound pressure can be given to the ear.

## Description

The present invention relates to an acoustic device from which sound pressure in a low-frequency band can be effectively listened to even when a small speaker unit is used.

Inventions related to acoustic devices intended to be vehicle-mounted are described in JP2021-11193 A, JP3-85096 A, and JP2006-20163 A. A structure in which a speaker unit is built into a head restraint is described in paragraph [0031] in JP2021-11193 A. Another structure of this type is illustrated in drawings in JP3-85096 A. A structure in which a speaker unit is attached in the back rest of a front seat is described in JP2006-20163 A.

In JP3-85096 A, a bass-reflex speaker system is described in which space to which sound pressure is given from the speaker unit is formed in the head restraint. In this speaker system, two resonant ducts are provided so as to communicate with space ahead of the speaker system from this space. The two resonant ducts are open toward both ears of the passenger leaning against the head restraint. According to the description in JP3-85096 A, low tones can be reproduced by using the bass-reflex speaker system.

In a structure in which a speaker unit is built into a head restraint or the back rest of a seat in a vehicle as described in JP2021-11193 A, JP3-85096 A, and JP2006-20163 A, a large speaker unit appropriate for reproduction of low tones is difficult to use, so a relatively small speaker unit needs to be used. To obtain an acoustic effect of low tones, it is necessary to lower the resonant frequency of a vibration unit in the speaker unit. In a small speaker unit, however, the diameters of a damper member and an edge member that support the vibration unit are small, so the spring coefficient of a support system composed of the damper member and edge member is high. Therefore, the resonant frequency of the vibration unit can be lowered only in a limited range. Another problem is that although the resonant frequency can be lowered by increasing the mass of the vibration unit including a diaphragm, if the mass of the vibration unit is increased in a relatively small speaker unit, a large load is exerted on the damper member and edge member having a small diameter, the diaphragm is likely to incline, for example. This makes a failure likely to occur.

As described above, according to the description in JP3-85096 A, low tones can be reproduced by structuring a bass-reflex speaker system. In narrow space as in a head restraint, however, only a small speaker can be mounted, so a frequency band that can be emphasized in the bass-reflex speaker system remains relatively high.

The present invention addresses the conventional problems described above with the object of providing an acoustic device from which sound pressure in a low-frequency band can be effectively listened to even when a small speaker unit is used.

The invention relates to an acoustic device according to the appended claims. Embodiments are disclosed in the dependent claims.

An acoustic device according to aspects of the present invention has: an enclosure; a duct communicating with inner space in the enclosure, the duct being open toward outer space; and a speaker unit attached in the enclosure, the speaker unit giving first sound pressure toward the outer space and also giving second sound pressure toward the inner space, the first sound pressure and the second sound pressure having mutually opposite phases.

In a state in which the speaker unit is attached in the enclosure, the resonant frequency of a vibration unit in the speaker unit is set in a frequency band lower than the resonant frequency of a Helmholtz resonator composed of the enclosure and the duct.

A listening position is set at a position at which a first straight-line distance from an opening in the duct open toward the outer space to the listening position is shorter than a second straight-line distance from a diaphragm in the speaker unit to the listening position.

With the acoustic device according to the present invention, the second straight-line distance from the diaphragm in the speaker unit to the listening position is preferably twice or more the first straight-line distance from the opening in the duct to the listening position.

The acoustic device according to the present invention can be structured so that the duct is folded twice or more. The ratio of the duct length of the duct to the radius of the duct is preferably at least 20 and at most 30.

With the acoustic device according to the present invention, a duct sound generation direction, in which the opening in the duct is oriented toward the outer space, and a unit sound generation direction, in which the speaker unit is oriented toward the outer space, are preferably mutually opposite.

The acoustic device according to the present invention can be structured so that the enclosure, the duct, and the speaker unit are accommodated in a head restraint.

Two ducts, for example, are provided so that the duct sound generation direction for each duct is oriented toward one of both ears of a listener, the ears being positioned ahead of the head restraint; and the unit sound generation direction is oriented backward.

With the acoustic device according to the present invention, a second speaker unit may be further mounted in the head restraint so as to be oriented in a direction that is the same as the duct sound generation direction.

With the acoustic device according to aspects of the present invention, the ratio of the duct length of the duct to the area of the duct cross section to increase the load mass of air in the duct, so that the mass Mms of a vibration system is increased, the mass Mms being the total of the mass of the vibration unit in the speaker unit attached in the enclosure, the mass of a spring support system composed of a dumper member and an edge member, and the load mass. Thus, even when a small speaker unit, in which the effective vibration radius of the diaphragm is small, is used, the resonant frequency of the vibration unit in the speaker unit having a bass-reflex structure can be lowered. This enables the resonant frequency of the vibration unit to be set in a frequency band lower than the resonant frequency of a Helmholtz resonator composed of an enclosure and ducts.

In the Helmholtz resonator, the contraction and expansion of an air spring in the enclosure is suppressed in a frequency band lower than the resonant frequency of the Helmholtz resonator, in which case air in the duct is moved by an amount equal to the volume of air that has been moved in the enclosure by the vibration of the vibration unit in the speaker unit. The vibration of the air in the duct at that time is in phase with the vibration of the vibration unit. When the resonant frequency of the vibration unit in the speaker unit is set in a frequency band lower than the resonant frequency of the Helmholtz resonator, if the vibration unit is vibrated at a low frequency around the resonant frequency of the vibration unit, air in the duct is vibrated in phase with the vibration of the vibration unit in a state close to resonance. Then, sound pressure with a low-frequency band emphasized is released from the duct toward the outer space.

However, the sound pressure released at that time from the duct toward the outer space is in phase with the vibration of the diaphragm in the speaker unit, so the phase of the sound pressure given from the diaphragm toward the outer space outside the enclosure (space opposite to the inner space in the enclosure) is reversed with respect to the phase of the sound pressure released from the duct toward the outer space. In the present invention, the listening position is set at a position at which the first straight-line distance from the opening in the duct to the listening position is shorter than the second straight-line distance from the diaphragm in the speaker unit to the listening position. Therefore, sound pressure released from the opening in the duct with a low-frequency band emphasized can arrive at the listening position without being offset by opposite-phase sound pressure given from the speaker unit toward the outer space. Thus, sound pressure in a low-frequency band can be effectively given to the listener. For example, the acoustic device of the present invention may be placed in a head restraint and may be used with the listening position close to the opening in the duct, in which case, even when a small speaker unit is used in a bass-reflex speaker system, sound pressure with a low-frequency band emphasized can be effectively given to the listener.
Fig. 1 is a perspective view illustrating a vehicle-mounted acoustic device in an embodiment of the present invention;
Fig. 2 is a plan sectional view of the vehicle-mounted acoustic device in Fig. 1;
Figs. 3A and 3B illustrate exemplary structures, each of which is used as a premise when simulation software is used to simulate characteristics of a bass-reflex speaker system;
Fig.4 is a graph illustrating simulation results of characteristics of a conventional bass-reflex speaker system, which is used as a comparative example;
Fig. 5 is a graph illustrating simulation results of characteristics of an acoustic device in an embodiment of the present invention;
Fig. 6 is a graph illustrating simulation results of characteristics of a specific example of an acoustic device of the present invention; and
Fig. 7 is also a graph illustrating simulation results of characteristics of a specific example of an acoustic device of the present invention.

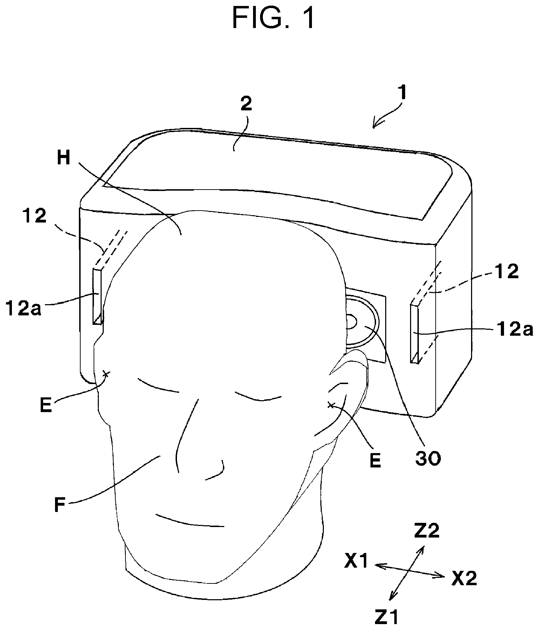

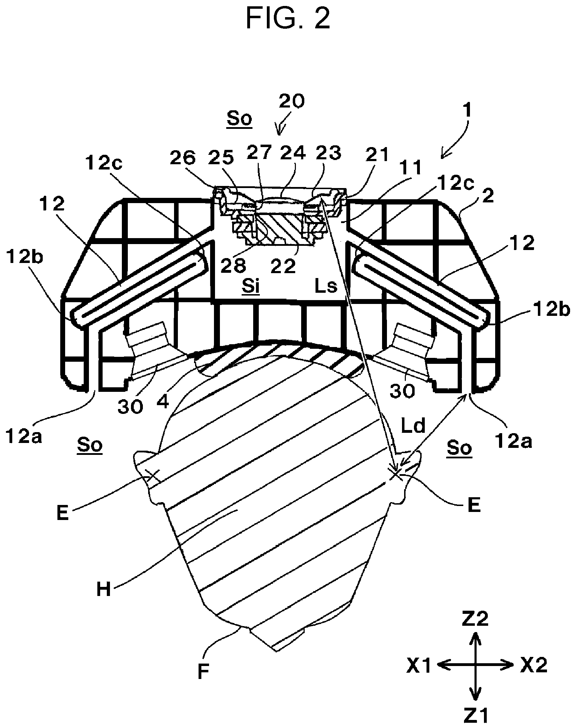

An acoustic device 1, which may be vehicle-mounted, that embodies an acoustic device of the present invention is illustrated in Figs. 1 and 2. The main portions of the vehicle-mounted acoustic device 1 are in this embodiment accommodated in a head restraint 2 oriented toward a seat in a vehicle. In Figs. 1 and 2, the head H of a listener, who is a passenger in the vehicle, is illustrated. The acoustic device of the present invention may be attached in a head restraint or the back rest of a seat in a train or another vehicle other than an automobile, or may be attached to a head restraint or back rest of a seat mounted in a home or theater.

With the vehicle-mounted acoustic device 1, the Z1-Z2 direction is the front-back direction, in which the Z1 direction is the forward direction and the Z2 direction is the backward direction. The face F of the listener is oriented forward (Z1 direction). The X1-X2 direction is the horizontal direction. The ears E of the listener on the left and right sides are aligned in the horizontal direction (left and right direction).

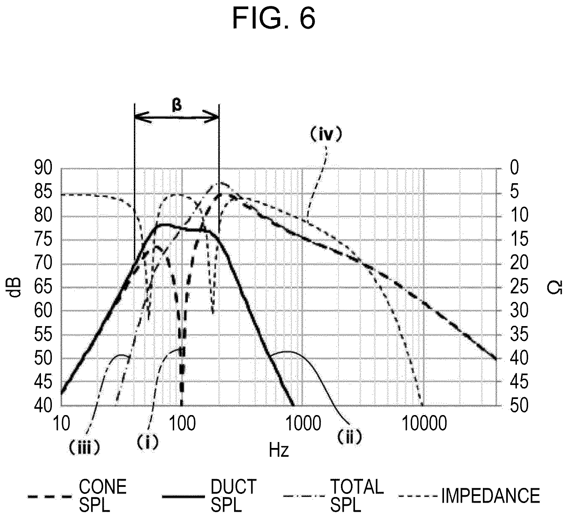

A structure of the vehicle-mounted acoustic device 1 in the head restraint 2 is illustrated in Fig. 2. The vehicle-mounted acoustic device 1 has an enclosure 11 attached in the head restraint 2, two ducts 12 extending from the enclosure 11, and a speaker unit 20 included in the enclosure 11. The enclosure 11, ducts 12, and speaker unit 20 constitute a bass-reflex speaker system. The enclosure 11 has a relatively small structure that can be accommodated in the head restraint 2. The volume of the enclosure 11 is, for example, at least 0.2 liters and at most 1.0 liter. In an example described later with reference to Fig. 6, the volume of the enclosure 11 is 0.4 liters.

Each of the two ducts 12 communicates with an inner space Si in the enclosure 11. In the forward direction (Z1 direction) of the head restraint 2, an opening 12a formed in each duct 12 is open to an outer space So. The openings 12a in the ducts 12 are open at positions that are apart from each other in the left-right direction (X1-X2 direction) and each of which is close to the ear E of the listener on the left or right side, whichever is appropriate.

As illustrated in Fig. 1, each duct 12 has a rectangular cross section, the area of which is constant over the entire duct length. With the vehicle-mounted acoustic device 1, each duct 12 has a large ratio of the duct length to the area of the duct cross section to increase the load mass of air in the duct 12, so that the resonant frequency F0 of the vibration unit in the speaker unit 20, which is part of the bass-reflex speaker system, can be set in a low frequency band. One duct 12 has at least two bends 12b and 12c at which the duct 12 is folded so that the duct 12, which is long, is placed in a narrow region in the head restraint 2. To increase the total sum of the mass loads of the two ducts 12, the ratio of the duct length to the radius is preferably at least 20 and at most 30. When the cross section is not circular as illustrated in Figs. 1 and 2, the term "radius" used in this description has a value obtained by calculating a radius on the assumption that the cross section is circular. When the area of the cross section of the duct 12 is assumed to be A, r calculated on the basis that A is equal to nr² is the radius obtained from the conversion. The radius, based on this definition, of the duct 12 is preferably at least 1 cm and at most 1.8 cm, and the area of the cross section is preferably at least 3 cm² and at most 10 cm². In the example described later with reference to Fig. 6, the aera of the cross section of one duct 12 is 5 cm² and the converted radius is 1.26 cm. Since the total of the duct lengths of the two ducts 12 is 32 cm, the ratio of the duct length to the radius is 25.4.

In the speaker unit 20, a frame 21 is fixed to a cabinet, which is part of the head restraint 2, as illustrated in Fig. 2. In the frame 21, a magnetic circuit 22 is fixed at a portion in the forward direction (Z1 direction), and a diaphragm 23 in a cone shape and a cap member 24 that cover the central portion of the diaphragm 23 are attached at a portion in the backward direction (Z2 direction). The diaphragm 23 and cap member 24 are supported by a damper member 25 and an edge member 26 so that the diaphragm 23 and cap member 24 can vibrate in the front-back direction (Z1-Z2 direction). A bobbin 27 extending forward is fixed to the diaphragm 23. A voice coil 28 wound around the bobbin 27 is positioned in a magnetic gap in the magnetic circuit 22. With the speaker unit 20, the diaphragm 23, cap member 24, bobbin 27, and voice coil 28 constitute a vibration unit. This vibration unit has a certain mass. The damper member 25 and edge member 26 constitute a spring support system. Part of the mass of the spring support system is added to the mass of the vibration unit.

In the speaker unit 20, the vibration unit including the diaphragm 23 is caused to vibrate in the front-back direction by an electromagnetic force, which is excited by a voice current given to the voice coil 28 and a magnetic flux traversing the voice coil 28 in the magnetic circuit 22. Due to the vibration of the diaphragm 23, sound pressure is given to the inner space Si in the enclosure 11 and other sound pressure is given to the outer space So. The sound pressure given to the inner space Si and the other sound pressure given to the outer space So have mutually opposite phases. In the vehicle-mounted acoustic device 1, a unit sound generation direction, in which sound pressure is given from the diaphragm 23 of the speaker unit 20 to the outer space So, and a duct sound generation direction, in which other sound pressure is given from the opening 12a in the duct 12 to the outer space So, are mutually opposite. In this embodiment, the unit sound generation direction is the backward direction (Z2 direction) and the duct sound generation direction is the forward direction (Z1 direction), as illustrated in Fig. 2.

The opening 12a in each duct 12 is open at a position close to the ear E of the listener on the left or right side, whichever is appropriate. The ears E illustrated in Fig. 2 are positioned at listening positions. A cushion 4 is attached to the outer surface at the front of the head restraint 2. When the listener sits on the seat, the position of the ear E with the head H in contact with the head restraint 2 is set as an appropriate listening position. A straight-line distance Ld from the set listening position to the opening 12a in the closest duct 12 is shorter than a straight-line distance Ls from the listening position to the diaphragm 23 in the speaker unit 20. The straight-line distance Ls is preferably twice or more the straight-line distance Ld and is more preferably triple or more the straight-line distance Ld. In the example described later with reference to Fig. 6, the straight-line distance Ls from the listening position to the vibration unit is 350 mm and the straight-line distance Ld from the listening position to the opening 12a in the closest duct 12 is 70 mm. That is, the straight-line distance Ls is five times the straight-line distance Ld.

In the vehicle-mounted acoustic device 1, second speaker units 30 are provided at the front of the head restraint 2, as illustrated in Figs. 1 and 2. The second speaker units 30 are positioned apart from each other in the left-right direction (X1-X2 direction). Each second speaker unit 30 generates sound pressure in a direction toward the ear E of the listener on the left or right side, whichever is appropriate. That is, the direction of sound generation by the second speaker unit 30 substantially matches the duct sound generation direction described above. With this vehicle-mounted acoustic device 1, the speaker unit 20 used in the bass-reflex speaker system emphasizes sound pressure in a low-frequency band; and the second speaker units 30 emphasizes sound pressure in a mid-frequency band, a high-frequency band, or a frequency band from a mid-frequency band to a high-frequency band.

Next, an operation of the vehicle-mounted acoustic device 1 will be described.

With the vehicle-mounted acoustic device 1 illustrated in Figs. 1 and 2, the resonant frequency F0 of the vibration unit in the speaker unit 20 is set in a frequency band lower than the resonant frequency Fd of a Helmholtz resonator composed of the enclosure 11 and ducts 12. Therefore, sound pressure with low tones emphasized is effectively given from the opening 12a in each duct 12 toward the relevant ear E. In addition, sound pressure in a mid-frequency band, a high-frequency band, or a frequency band from a mid-frequency band to a high-frequency band is given from each second speaker unit 30 mounted in the head restraint 2. This enables the listener to listen to sounds in a wide range of frequency bands.

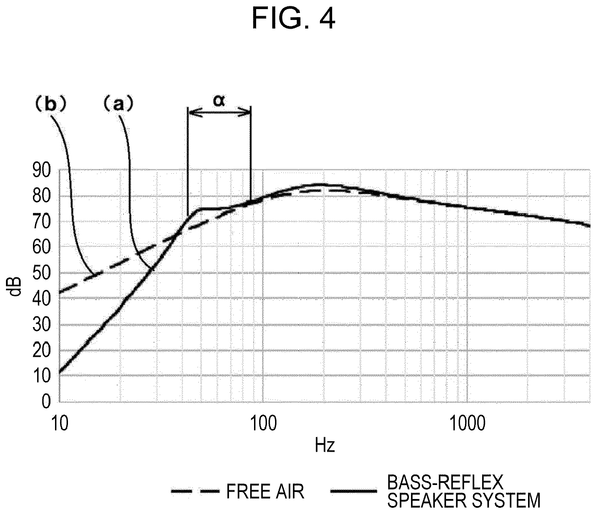

Fig. 4 illustrates characteristics of a general bass-reflex speaker system in related art as a comparative example compared with the embodiment of the present invention. The graph in Fig. 4 represents simulation results, showing, on the horizontal axis, the frequency of a trigonometric function wave (sine wave) entered into a voice coil in a speaker unit and also showing, on the vertical axis, changes in sound pressure level on the assumption that sound pressure was measured at a distance of one meter from the diaphragm in the speaker unit. In the graph in Fig. 4, (b) indicates changes in the level of only sound pressure having a positive-phase component given from the diaphragm in the forward direction (opposite to a direction toward the magnetic circuit) in a state in which the speaker unit is not mounted in a box or the like. In the simulation, the resonant frequency f0 of the vibration unit in the speaker unit was set to about 100 Hz. With the speaker unit, a frequency band lower than the resonant frequency f0 is an inertial region. In the inertial region, the diaphragm, which moves at low frequencies, cannot push air and thereby cannot effectively form sound pressure. Therefore, as the frequency is lowered, sensitivity becomes lower and the sound pressure level is more lowered. In view of this, with the bass-reflex speaker system in related art, the resonant frequency fd of a Helmholtz resonator composed of an enclosure and ducts is set in a range lower than the resonant frequency f0 of the speaker unit. In the graph in Fig. 4, (a) indicates changes in sound pressure level in the bass-reflex speaker system in related art. With the bass-reflex speaker system in related art, the resonant frequency fd is set in a frequency band lower than the resonant frequency f0 of the speaker unit. Therefore, in a frequency band (α) lower than the resonant frequency f0 of the speaker unit, sensitivity is raised due to Helmholtz resonance.

In the graph in Fig. 4, however, when a frequency further lower than the frequency band (α) with sensitivity raised is entered, sensitivity is extremely lowered and the sound pressure level is rapidly lowered as indicated by (a). Therefore, the frequency band (α) within which sensitivity can be recovered is limited to a narrow frequency band. In addition, the speaker unit accommodated in the head restraint 2 or the like is limited to a small size, and the resonant frequency f0 of the vibration unit in the speaker unit is originally in a high-frequency range. Therefore, the frequency band (α) within which sensitivity can be recovered due to the effect of a bass-reflex speaker system can also be set only in a relatively high frequency band. This makes it difficult for a small bass-reflex speaker system in related art, which is accommodated in the head restraint 2 or the like, to effectively give sound pressure in a low-frequency band to the ears E.

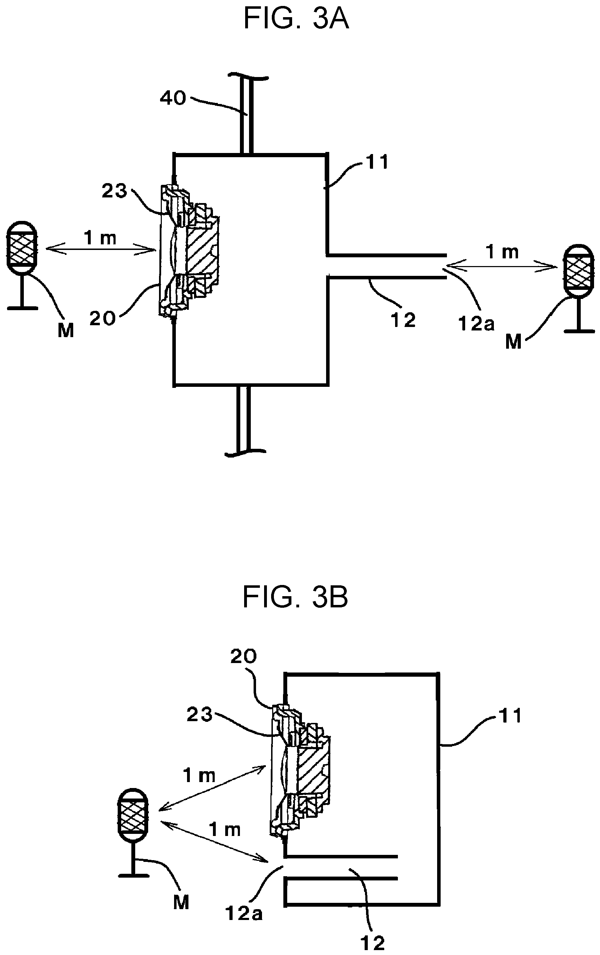

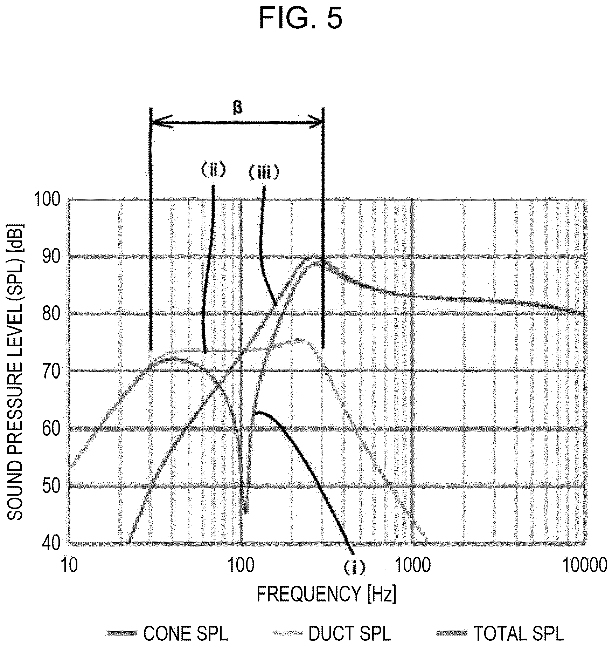

Fig. 5 illustrates acoustic characteristics of a vehicle-mounted acoustic device 1 in the embodiment of the present invention. Fig. 6 illustrates acoustic characteristics of a vehicle-mounted acoustic device 1 in an example in which the present invention is further specifically described. The graphs in Figs. 5 and 6 indicate simulation results obtained as a result of using simulation software to enter parameters. This simulation software can output frequency characteristics in the form of graphs in response to parameters entered on the assumption that an acoustic structure as illustrated in Fig. 3A or 3B is used. In simulation in which the structure in Fig. 3A was assumed, microphones M were assumed in a bass-reflex speaker system, the microphones M being made independent from each other by a baffle plate 40. Frequency characteristics were obtained that are equivalent to frequency characteristics obtained when sound pressure is acquired by the microphone M at a distance of one meter from the diaphragm 23 in the speaker unit 20 and sound pressure is similarly acquired by the microphone M at a distance of one meter from the opening 12a in the duct 12. In simulation in which the structure in Fig. 3B was assumed, frequency characteristics were obtained that are equivalent to frequency characteristics obtained when sound pressure from the diaphragm 23 in the speaker unit 20 and sound pressure from the opening 12a in the duct 12 are combined at the microphone M at a distance of one meter from both the diaphragm 23 and the opening 12a, without a baffle plate being used. The graphs in Figs. 5 and 6 show, on the horizontal axis, the frequency of a trigonometric function wave (sine wave) entered into the voice coil 28 in the speaker unit 20, and also show, on the vertical axis, changes in sound pressure level. In the graphs in Figs. 5 and 6, (i) indicates the frequency characteristics of sound pressure levels obtained from the speaker unit 20 alone in the assumption based on Fig. 3A without being affected by sound pressure from the duct 12. Similarly, (ii) indicates the frequency characteristics of sound pressure levels obtained from the duct 12 alone without being affected by sound pressure from the speaker unit 20. In the assumption based on Fig. 3B, (iii) indicates frequency characteristics obtained as a result of combining (totalizing)the characteristics, indicated by (i), of sound pressure from the speaker unit 20 and the characteristics, indicated by (ii), of sound pressure from the duct 12 together.

The resonant frequency Fd of the Helmholtz resonator is inversely proportional to the internal volume of the enclosure 11 and to the duct length of the duct 12, and is proportional to the cross section of the duct 12. With the vehicle-mounted acoustic device 1, illustrated in Fig. 2, in the embodiment of the present invention, the duct 12 has a long duct length and a small cross section. Therefore, even when the volume of the enclosure 11 is small, the resonant frequency Fd can be set in a relatively low frequency band. The internal volume of the enclosure 11 is at least 0.2 liters and at most 1.0 liter, the cross section of the duct 12 is at least 3 cm² and at most 10 cm², and the duct length of the duct 12 is at least 20 cm and at most 40 cm. Then, the resonant frequency Fd of the Helmholtz resonator preferably lie in a range of about 80 Hz to about 300 Hz.

With the vehicle-mounted acoustic device 1 in the embodiment of the present invention, the ratio of the duct length to the radius is set to at least 20 and at most 30 to increase the load mass of air in the duct 12. As a result, even when the speaker unit 20 with a small size is used, the resonant frequency F0 of the vibration unit in the speaker unit 20 in the bass-reflex speaker system can be set in a low frequency band. For example, the resonant frequency F0 can be set in the range of about 60 Hz to about 150 Hz.

As seen from the frequency characteristics indicated by (iii) in Fig. 5, the sensitivity of the sound pressure obtained as a result of combining sound pressure from the speaker unit 20 and sound pressure from the duct 12 together rapidly lowers in a frequency band lower than the resonant frequency Fd of the Helmholtz resonator. This is because in a frequency band lower than the resonant frequency Fd of the Helmholtz resonator, air in the duct 12 moves due to the vibration of the vibration unit in the speaker unit 20 and the phase of the vibration of the air in the duct 12 at that time becomes the same as the phase of the vibration of the vibration unit. Since sound pressure given from the diaphragm 23 to the outer space So has a phase opposite to the phase of sound pressure released from the duct 12 toward the outer space So, the sensitivity of the combined sound pressure rapidly lowers, starting from about 200 Hz toward a low frequency band.

In view of this, in the embodiment of the present invention, the load mass of the duct 12 is increased by prolonging the duct length of the duct 12 and reducing the cross section of the duct 12 so that the resonant frequency F0 of the vibration unit in the speaker unit 20 in the bass-reflex speaker system is set in a frequency band lower than the resonant frequency Fd. As described above, in a frequency band lower than the resonant frequency Fd of the Helmholtz resonator, air in the duct 12 moves in a phase that is the same as the phase of the vibration of the vibration unit. When the vibration unit in the speaker unit 20 is resonated in this frequency band, the amplitude of the vibration of the air in the duct 12 can be increased in a state close to resonance, so sound pressure in a low-frequency band can be emphasized during the release of sound pressure from the opening 12a in the duct 12 toward the outer space So. As a result, as seen from the characteristics indicated by (ii) in Fig. 5, the sensitivity of sound pressure obtained from the duct 12 alone is increased in a frequency band β due to a resonance action at the resonant frequency F0. When the resonant frequency F0 of the vibration unit in the speaker unit 20 is set in a low frequency band, the frequency band β, within which sound pressure is emphasized, can be set in a relatively low frequency band. In addition, the bandwidth of the frequency band β, within which sound pressure is emphasized, is relatively widened, as indicated in Fig. 5.

In the frequency band β, the vibration of the vibration unit in the speaker unit 20 and the vibration of the air in the duct 12 are in phase with each other, and sound pressure exerted on the outer space So from the speaker unit 20 and sound pressure exerted on the outer space So from the duct 12 have mutually opposite phases. However, when the head H of the listener is positioned at the front of the head restraint 2, as illustrated in Fig. 2, the straight-line distance Ld from the ear E, which is set as the listening position, to the opening 12a in the duct 12 is shorter than the straight-line distance Ls from the ear E to the diaphragm 23 in the speaker unit 20. The straight-line distance Ls is preferably twice or more the straight-line distance Ld and is more preferably triple or more the straight-line distance Ld. During the propagation of sound pressure in space, the sound pressure is attenuated in inverse proportion to the square of the distance. Since the opening 12a in the duct 12 is close to the ear E as illustrated in Fig. 2, sound pressure is directly exerted on the ear E from the opening 12a. At the same time, sound pressure, from the speaker unit 20, having an opposite phase is greatly attenuated before the sound pressure arrives at the ear E. Therefore, the ear E can listen with sound pressure emphasized in the frequency band β of low tones in Fig. 5.

### Example

Fig. 6 illustrates an example in which a vehicle-mounted acoustic device 1 is further specifically described. In Fig. 6 as well, (i) indicates the frequency characteristics of sound pressure from only the vibration unit in the speaker unit 20 illustrated in Fig. 3A, and (ii) indicates the frequency characteristics of sound pressure from only the duct 12. The characteristics indicated by (iii) are frequency characteristics when sound pressure from the speaker unit 20 and sound pressure from the duct 12 are listened to at the same time as illustrated in Fig. 3B. The characteristics indicated by (iv) are impedance characteristics.

Specific parameters in the example in Fig. 6 are as follows.

### Parameters for the Helmholtz resonator

Internal volume of the enclosure 11: 0.4 litters
Duct length of the duct 12: 32 cm (total length of the two ducts 12)
Cross section area of the interior of the duct 12: 5 cm² (radius of a circle equivalent: 1.26 cm)
Resonant frequency Fd of the Helmholtz resonator: 104 Hz

### Parameters for the bass-reflex speaker system

Effective vibration diameter of the diaphragm 23: 6.4 cm
Spring coefficient Kms of the support system (damper member 25 and edge member 26): 2.83 N/mm
Mass Mms of a vibration system, which is the total of the mass of the vibration unit, 1/2 of the mass of the support system, and the load mass of air in front of and behind the diaphragm 23: 7.75 g
Mechanical resistance RMs by the support system: 1.083 kg/s
Inductance Le of the voice coil 28: 0.806 mH
Direct-current resistance Re of the voice coil 28: 5.19 Ω
Resonant frequency F0 of the vibration unit: 96.2 Hz Input signals entered into the speaker unit
Alternating-current signals, equivalent to 1 watt (W), in sine wave form are entered into the voice coil 28.

In the example in Fig. 6, sound pressure in the frequency band β, which is a low-frequency band, released from the opening 12a in the duct 12 at frequencies of 30 Hz to 200 Hz can be emphasized, enabling the ear E to listen to the emphasized sound pressure.

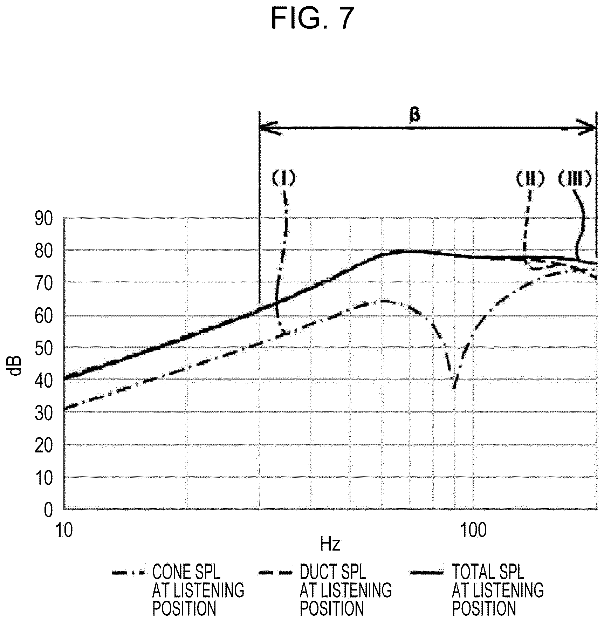

Fig. 7 illustrates characteristics obtained by simulating changes in sound pressure at the listening position at which the ear E is positioned in the vehicle-mounted acoustic device 1 in the example described with reference to Fig. 6. The straight-line distance Ld from the listening position to the opening 12a in the duct 12 was 70 mm. The straight-line distance Ls from the listening position to the diaphragm 23 in the speaker unit 20 was 350 mm. One-watt sine waves were entered into the voice coil 28. In Fig. 7, (II) indicates the frequency characteristics of only sound pressure released from the duct 12 and obtained at the listening position at which the ear E is positioned, and (I) indicates the frequency characteristics of only sound pressure released from the speaker unit 20 and obtained at the listening position at which the ear E is positioned. It was found from Fig. 7 that, in the frequency band β within the range of 30 Hz to 200 Hz, the sound pressure, indicated by (I), which had an opposite phase and which was released from the speaker unit 20 and arrived at the ear E, was attenuated 10 decibels (dB) or more with respect to the sound pressure, indicated by (II), which was released from the opening 12a in the duct 12 and arrived at the ear E. The line indicated by (III) indicates the strength of sound pressure combined when both the sound pressure from the duct 12 and the sound pressure from the speaker unit 20 were listened to at the listening position at which the ear E was positioned. The level of this combined sound pressure was almost the same as the level of the sound pressure that was released from the duct 12 and arrived at the ear E.

## Claims

1. An acoustic device comprising: an enclosure (11); a duct (12) communicating with an inner space (Si) in the enclosure (11), the duct (12) being open toward an outer space (So); and a speaker unit (20) attached in the enclosure (11), the speaker unit (20) giving first sound pressure toward the outer space (So) and also giving second sound pressure toward the inner space (Si), the first sound pressure and the second sound pressure having mutually opposite phases; the acoustic device being configured such that
in a state in which the speaker unit (20) is attached in the enclosure (11), a resonant frequency (F0) of a vibration unit in the speaker unit (20) is set in a frequency band lower than a resonant frequency(Fd) of a Helmholtz resonator composed of the enclosure (11) and the duct (12), and
a listening position is set at a position at which a straight-line distance (Ld) from an opening (12a) in the duct (12) open toward the outer space (So) to the listening position is shorter than a straight-line distance (Ls) from a diaphragm (23) in the speaker unit (20) to the listening position.

2. The acoustic device according to Claim 1, wherein the straight-line distance (Ls) from the diaphragm (23) in the speaker unit (20) to the listening position is twice or more the straight-line distance (Ld) from the opening (12a) in the duct (12) to the listening position.

3. The acoustic device according to Claim 1 or 2, wherein the duct (12) is folded twice or more.

4. The acoustic device according to any one of Claims 1 to 3, wherein a ratio of a duct length of the duct (12) to a radius of the duct (12) is at least 20 and at most 30.

5. The acoustic device according to any one of Claims 1 to 4, wherein a duct sound generation direction, in which the opening (12a) in the duct (12) is oriented toward the outer space (So), and a unit sound generation direction, in which the speaker unit (20) is oriented toward the outer space (So), are mutually opposite.

6. The acoustic device according to Claim 5, wherein the enclosure (11), the duct (12), and the speaker unit (20) are accommodated in a head restraint (2).

7. The acoustic device according to Claim 6, wherein two ducts (12) are provided so that the duct sound generation direction for each duct (12) is oriented toward one of both ears (E) of a listener, the ears (E) being positioned ahead of the head restraint (2); and the unit sound generation direction is oriented backward.

8. The acoustic device according to any one of Claims 5 to 7, wherein a second speaker unit (30) is mounted in a head restraint (2) so as to be oriented in a direction that is the same as the duct sound generation direction.
